# EUROPEAN PATENT APPLICATION

(11) **EP 4 776 051 A1**
(43) Date of publication of application: **15.07.2026**
(21) Application number: 25151287.7
(22) Date of filing: 10.01.2025
(51) Int. Cl.: G02B 27/00, G02B 27/01, G02C 7/08, G02C 7/14

(54) **CONVERGENCE INSUFFICIENCY CORRECTION IN OPTICAL APPARATUSES**

(71) Applicant: Pixieray Oy, 02630 Espoo (FI)
(72) Inventor: Melakari, Klaus, 02140 Espoo (FI); Melakari, Rebecca, 02140 Espoo (FI)
(74) Representative: Moosedog Oy

(57) **Abstract**

Disclosed is an optical apparatus (102) comprising first active optical element (AOE) (104) for first eye (106) of user; eye-tracking means (108); and processor(s) (110) configured to: process eye-tracking data for determining gaze directions of both eyes; determine given optical depth (D) of gaze point at which user is gazing; detect when given criterion is satisfied, such satisfaction being when gaze directions of both eyes at another optical depth is different from given optical depth of gaze point, and/or user input for activating convergence insufficiency correction mode (CICM) is received; and when it is detected that given criterion is satisfied, activate CICM; determine first prismatic correction (PC) to be applied by first AOE; and generate first drive signal to drive first AOE for applying first PC, to optically shift light (202) incident thereupon.

## Description

### TECHNICAL FIELD

The present disclosure relates to optical apparatuses incorporating convergence insufficiency correction. Moreover, the present disclosure relates to methods incorporating convergence insufficiency correction in optical apparatuses.

### BACKGROUND

A high percentage (20-40 percent) of people have reduced capability to perform convergence vision when looking at nearby objects. Convergence Insufficiency (CI) is characterized by a decreased ability to converge the eyes and maintain binocular fusion while focusing on a near target. When the person has a decreased capability for convergence vision, their eyes struggle to work together effectively. As a result, one eye tends to dominate while the other eye is not aligned properly. This lack of coordination, depth perception and stereo vision can lead to various vision-related issues such as blurry vision, double images, tiredness, headache and nausea.

Despite recent advancements in technology related to the smart eyewear, existing techniques and equipment have several limitations associated herewith. Conventionally, prismatic progressive lenses are used to provide solution to the convergence insufficiency. The prismatic progressive lenses incorporate prisms and progressive power changes to aid the people having reduced capability to perform convergence vision. However, such progressive power changes causes visual discomfort or disorientation. Moreover, the prismatic progressive lenses can cause visual distortions when a user changes their gaze rapidly. Furthermore, the prismatic progressive lenses cause a distorted field of view, which can cause issues in traffic, while walking, in sports, etc.

Therefore, in light of the foregoing discussion, there exists a need to overcome the aforementioned drawbacks.

### SUM MARY

The aim of the present disclosure is to provide optical apparatuses incorporating convergence insufficiency correction, and methods incorporating convergence insufficiency correction in the optical apparatuses, to facilitate artificial convergence of gaze direction of first eye and gaze direction of second eye. The aim of the present disclosure is achieved by optical apparatuses incorporating convergence insufficiency correction, and methods incorporating convergence insufficiency correction in the optical apparatuses as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is an illustration of an architecture of an optical apparatus and a system comprising the optical apparatus, in accordance with an embodiment of the present disclosure;
FIG. 2 shows an exemplary graphical representation of an optical apparatus incorporating convergence insufficiency correction, in accordance with an embodiment of the present disclosure; and
FIG. 3 illustrates a flowchart illustrating steps of a method incorporating convergence insufficiency correction in optical apparatuses, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides an optical apparatus comprising:
a first active optical element for a first eye of a user;
eye-tracking means; and
at least one processor configured to:
   process eye-tracking data, collected by the eye-tracking means, for determining a gaze direction of the first eye and a gaze direction of a second eye of the user;
   determine a given optical depth of a gaze point at which the user is gazing, based on at least one of: sensor data collected by a depth sensor, a pre-known optical depth of the gaze point;
   detect when a given criterion for convergence insufficiency with respect to the gaze point is satisfied, wherein the given criterion is satisfied when at least one of the following is true:
      the gaze direction of the first eye and the gaze direction of the second eye converge at another optical depth that is different from the given optical depth of the gaze point,
      a user input for activating a convergence insufficiency correction mode of the optical apparatus is received; and
   when it is detected that the given criterion is satisfied,
      activate the convergence insufficiency correction mode of the optical apparatus;
      determine a first prismatic correction to be applied by the first active optical element, based on the given optical depth, the another optical depth, and at least one of: an actual angle of convergence of the gaze direction of the first eye and the gaze direction of the second eye for the another optical depth, an expected angle of convergence for the given optical depth, a correction error between the actual angle and the expected angle for the given optical depth; and
      generate a first drive signal to drive the first active optical element for at least applying the first prismatic correction, to optically shift light incident thereupon and emanating from the gaze point, to be incident on a fovea of the first eye.

In a second aspect, the present disclosure provides a method incorporating convergence insufficiency correction in an optical apparatus, the method implemented by the optical apparatus, the optical apparatus comprising a first active optical element for a first eye of a user, and eye-tracking means, the method comprising:
processing eye-tracking data, collected by the eye-tracking means, for determining a gaze direction of the first eye and a gaze direction of a second eye of the user;
determining a given optical depth of a gaze point at which the user is gazing, based on at least one of: sensor data collected by a depth sensor, a pre-known optical depth of the gaze point;
detecting when a given criterion for convergence insufficiency with respect to the gaze point is satisfied, wherein the given criterion is satisfied when at least one of the following is true:
   the gaze direction of the first eye and the gaze direction of the second eye converge at another optical depth that is different from the given optical depth of the gaze point,
   a user input for activating a convergence insufficiency correction mode of the optical apparatus is received; and
when it is detected that the given criterion is satisfied,
   activating the convergence insufficiency correction mode of the optical apparatus;
   determining a first prismatic correction to be applied by the first active optical element, based on the given optical depth, the another optical depth, and at least one of: an actual angle of convergence of the gaze direction of the first eye and the gaze direction of the second eye for the another optical depth, an expected angle of convergence for the given optical depth, a correction error between the actual angle and the expected angle for the given optical depth; and
   generating a first drive signal to drive the first active optical element for at least applying the first prismatic correction, to optically shift light incident thereupon and emanating from the gaze point, to be incident on a fovea of the first eye.

The present disclosure provides the aforementioned first aspect and the aforementioned second aspect, wherein the optical apparatus is configured to actively check for presence of convergence sufficiency, and if convergence insufficiency is found to be present, dynamically produce the first prismatic correction for the first eye by generating the first drive signal to drive the first optical element according to the aforementioned treatment solution. The aforementioned treatment solution takes into account the actual optical depth (namely, the another optical depth) and the expected optical depth (namely, the given optical depth) along with at least one of: the actual angle of convergence, the expected angle of convergence, the correction error for the given optical depth, wherein the first prismatic correction can be dynamically produced accordingly. This facilitates converging the gaze direction of the first eye with the gaze direction of the second eye, while maintaining a high visual acuity when the user views a real-world environment. Moreover, the first optical element can be used independently. In an example, when viewing a nearby object, the first eye may not fully rotate inwards, while the second eye may function perfectly. Hence, in such a case, the first prismatic correction is applied to only the first eye. In this way, the optical apparatus and the method facilitate a user-friendly, simple and effective treatment for convergence insufficiency, thus providing a solution on how to adaptively control the optical apparatus in an accurate manner for correcting convergence insufficiency.

Throughout the present disclosure, the term *"optical apparatus"* refers to an apparatus that is to be worn over the eyes of the user. Examples of such an optical apparatus include, but are not limited to, a pair of glasses, a pair of sunglasses, smart glasses, and a head-mounted display.

Throughout the present disclosure, the term *"active optical element"* refers to an optical element whose optical power can be changed. In other words, an optical power of the first active optical element is (actively) adjustable. In this regard, the first active optical element is (optionally, electrically) controlled to produce optical power(s) for the first eye of the user. The first active optical element is arranged in front of the first eye of the user. Herein, the first eye is any one of a left eye or a right eye of the user. Optionally, the first active optical element may be implemented as at least one of: a liquid crystal lens, a spatial light modulator. Herein, the liquid crystal lens comprises a liquid crystal material, wherein optical properties of the liquid crystal material is utilized to alter a refractive index. This changes an optical power of the first active optical element. Moreover, the spatial light modulator employs a liquid crystal material to spatially vary a modulation of a beam of light, thereby changing a diffraction pattern of the beam of light.

Throughout the present disclosure, the term *"eye-tracking means"* refers to a specialized equipment that is employed to detect and/or follow a direction of gaze of the user of the optical apparatus. Such eye-tracking is performed when the optical apparatus, in operation, is worn by the user. In this regard, the eye-tracking means is employed to detect and/or follow the direction of gaze of the first eye and the second eye of the user. Herein, the second eye is another one of the right eye or the left eye of the user. Optionally, the eye-tracking means is implemented by way of at least one of: contact lenses having sensors, cameras monitoring features of the user's eyes. Such features of the user's eyes may comprise at least one of: a shape of a pupil of the user's eye, a size of the pupil, corneal reflections of light emanating from a real-world environment from a surface of the user's eye, a relative position of the pupil with respect to the corneal reflections, a relative position of the pupil with respect to corners of the user's eye. The eye-tracking means is configured to collect the eye-tracking data and send the eye-tracking data to the at least one processor. It will be appreciated that the eye-tracking data is collected repeatedly by the eye-tracking means throughout an operation of the optical apparatus, as gaze of the user's eyes keeps changing whilst she/he uses the optical apparatus. An up-to-date eye-tracking data (indicative of the gaze directions of the first eye and the second eye of the user) allows for adaptively controlling the first active optical element of the optical apparatus in an accurate manner, for correcting convergence insufficiency. In an instance, when the eye-tracking means is implemented as a camera, the eye-tracking data is in form of images of the user's eyes. In another instance, when the eye-tracking means is implemented by way of contact lenses having sensors, the eye-tracking data is the sensor data collected from the sensors.

It will be appreciated that the at least one processor is communicably coupled with the first active optical element, and the eye-tracking means. The at least one processor could be implemented as any one of: a microprocessor, a microcontroller, or a controller. As an example, the at least one processor could be implemented as an application-specific integrated circuit (ASIC) chip, or a reduced instruction set computer (RISC) chip.

The at least one processor is configured to determine the gaze direction of the given eye of the user based on the eye-tracking data. Herein, the *"gaze direction"* refers to a direction in which a given eye (namely, the first eye and the second eye) of the user is gazing. The gaze direction may be represented by a gaze vector. The gaze direction of the first eye is different from the gaze direction of the second eye. Optionally, when processing the gaze-tracking data, the at least one processor is configured to employ at least one of: an image processing algorithm, a feature extraction algorithm, a data processing algorithm. Other suitable algorithm(s) can be employed.

The at least one processor is configured to determine the gaze point at which the user is looking. Herein, the *"gaze point"* is a point in a real-world environment at which the user's gaze is focused. The gaze point is a point of interest of the user, in the real-world environment. Herein, the gaze point is determined by mapping the gaze direction of the first eye and the gaze direction of the second eye to a corresponding point in the real-world environment, at which the gaze directions converge. Subsequently, the at least one processor is configured to determine the given optical depth (i.e., a distance) of the gaze point (in the real-world environment at which the user is looking) from the user's eyes. Herein, the term *"optical depth"* of the gaze point refers to an optical distance between the gaze point and the optical apparatus, in the real-world environment. In this regard, the given optical depth can be determined, based on an inter-pupillary distance (IPD) of the user, by using triangulation. Herein, the term *"given optical depth"* refers to an expected (namely, ideal) distance of convergence of the gaze direction of the first eye and the gaze direction of the second eye.

Optionally, the given optical depth lies in a range of 20 centimetres to 200 centimetres. The given optical depth may for example, lie in a range of 20, 30, 40, 60, 100, or 150 centimetres to 50, 110, 160, 180, 190, or 200 centimetres. While convergence insufficiency primarily affects near vision, it can also impact intermediate distances. A technical benefit of the aforementioned range of the given optical depth is that the range covers deviations of the gaze direction of the first eye and the gaze direction of the second eye for all age ranges.

Throughout the present disclosure, the term *"depth sensor"* refers to a sensor that is operable to at least detect optical depths in the real-world environment so as to capture at least one depth image of the real-world environment. A given depth image represents optical depth(s) of the gaze point in the real-world environment. The given depth image may also represent a visual content of the real-world environment, in addition to the optical depth(s) of the real object(s). Optionally, the given depth image is a two-dimensional (2D) depth image or a three-dimensional (3D) depth image. The depth sensor may be implemented as a light-based depth sensor, a sound-based depth sensor, or similar. Herein, the depth sensor is configured to collect the sensor data and send the sensor data to the at least one processor. It will be appreciated that the sensor data is collected repeatedly by the depth sensor throughout an operation of the optical apparatus, as gaze of the user's eyes keeps changing whilst she/he uses the optical apparatus. In an instance, when the depth sensor is implemented as the light-based depth sensor, the sensor data is in form of the depth image of the real-world environment. In another instance, when the depth sensor is implemented as the sound-based depth sensor, the sensor data is in form of time measurements, wherein the time measurements is indicative of a time taken for sound waves, which are emitted by the sound-based depth sensor, to return. A technical effect of determining the given optical depth of the gaze point based on the sensor data is that the at least one processor of the optical apparatus is configured to adapt when gaze directions of the user's eyes keeps changing, thus ensuring accurate estimation of the given optical depth for dynamic or unpredictable scenarios.

Moreover, the given optical depth of the gaze point at which the user is gazing can be pre-determined and pre-stored in a form of the pre-known optical depth of the gaze point at, optionally, a data repository that is optionally communicably coupled with the at least one processor. In such a case, the at least one processor is configured to obtain the given optical depth from the data repository. Such a data repository may be implemented as a memory of the optical apparatus, a memory of a computing device communicably coupled to the optical apparatus, a removable memory, a cloud-based memory, or similar. In this regard, the given optical depth of the gaze point is pre-determined by an ophthalmologist. In such a case, the ophthalmologist conducts at least one eye test for the user's eyes to determine the given optical depth of the gaze point at which the user is gazing. For example, during an eye test, the user may be asked to look at a target at a fixed position relative to the user. A technical effect of determining the given optical depth of the gaze point based on the pre-known optical depth is that it enhances accuracy in scenarios where the sensor data alone may be ambiguous (for example, an exemplary scenario where there is poor lighting). This reduces computational complexity and a processing time, as usage of the pre-known optical depth eliminates a need for computationally intensive processing. A technical effect of determining the given optical depth of the gaze point based on a combination of the sensor data and the pre-known optical depth is that it mitigates inaccuracies or uncertainties that can be introduced by either of them, thus ensuring an accurate and adaptive determination of the given optical depth.

The at least one processor is configured to detect whether the given criteria is satisfied or not. Herein, the term *"criteria"* refers to a condition on which a decision and/or further processing steps may be based. In this regard, when the given criteria is satisfied, the user's eyes are considered to suffer from convergence insufficiency. In the given criteria, the phrase *"at least one"* means that the given criteria would be satisfied even when only of the following conditions (namely, Condition 1 and Condition 2) is true.

### Condition 1:

It will be appreciated that in order to clearly see objects at the gaze point in the real-world environment with binocular vision, the gaze direction of the first eye and the gaze direction of the second eye need to converge at the given optical depth. However, when the user's eyes suffer from convergence insufficiency, the gaze direction of the first eye and the gaze direction of the second eye do not converge at the given optical depth, and instead converges at the another optical depth. Herein, the term *"another optical depth"* refers to an actual (non-ideal) distance of convergence of the gaze direction of the first eye and the gaze direction of the second eye. This leads to a misalignment of the convergence of the gaze directions relative to the given optical depth of the gaze point to be viewed.

It is possible that any one of the first eye or the second eye is not able to align itself with another one of the second eye or the first eye, and the gaze direction of any one of the first eye or the second eye consistently misses to converge with the gaze direction of another one of the second eye or the first eye. This leads to a disparity in the gaze directions between the first eye and the second eye. Alternatively, it is also possible that gaze direction of the first eye and the gaze direction of the second eye self-converge for a portion of time, and misses to converge for a remaining portion of the time. This may happen when an existing underlying condition deteriorates a health of the user's eyes over time, as a result of which lens of the user's eyes swells up for the portion of the time, and shrinks for the remaining portion of the time. Hence, the gaze direction of the first eye and the gaze direction of the second eye: converges at the given optical depth during the portion of the time, and converges at the another optical depth during the remaining portion of the time.

### Condition 2:

The user input is provided to the at least one processor by using at least one input means, wherein the optical apparatus comprises the at least one input means. In this regard, the user input is a direct means to activate the convergence insufficiency correction mode. Beneficially, such user input provides an ability to manually control the convergence insufficiency correction mode, thus allowing adaptive and real-time (or near real-time) intervention by the user, as compared to conventional systems that focus on automated or pre-configured adjustments. Such intervention allows the user to customize a requirement for the convergence insufficiency, thus enhancing a therapeutic outcome and user experience. Moreover, providing the user input is particularly beneficial for scenarios where the user needs the correction for the convergence insufficiency only temporarily, for example such as during specific activities that require enhanced visual focus.

Herein, the at least one input means is implemented as one of: a physical slider, a button. The user input is used to conveniently control the activation (or deactivation) the convergence insufficiency correction mode of the optical apparatus, via the at least one input means, as per the user's preference. When the user input is used for activating the convergence insufficiency correction mode of the optical apparatus, the at least one processor is configured to generate a drive signal to adjust the optical power of the first active optical element, without a need to detect whether the given criteria is satisfied or not. This flexibility of activation of the convergence insufficiency correction mode may, for example, be beneficial in a scenario where the user may require the convergence insufficiency correction mode of the optical apparatus only for a certain duration of time during a typical day when she/he wants to improve vision in the given eye of the user.

When it is detected that the given criteria is satisfied, it means that the user is considered to suffer from convergence insufficiency. In order to treat the convergence insufficiency, the convergence insufficiency correction mode is activated for at least the first active optical element.

When the gaze direction of the first eye and the gaze direction of the second eye converge at the another optical depth, they converge at the actual angle of convergence. Herein, the term *"actual angle of convergence"* refers to an actual (non-ideal) angle of convergence. The use of the actual angle of convergence provides precise real-time feedback for adjusting the first prismatic correction. The actual angle of convergence is physically determined by analysing a physical alignment of the gaze direction of the first eye and the gaze direction of the second eye, thus enabling the system to accurately correct any misalignment caused by the convergence insufficiency. Beneficially, determining the first prismatic correction in such a manner allows for adaptive, and real-time corrections for convergence insufficiency. When the gaze direction of the first eye and the gaze direction of the second eye are supposed to converge at the given optical depth, they would converge at the expected angle of convergence at the another optical depth. Herein, the term *"expected angle of convergence"* refers to an ideal angle of convergence at the given optical depth. In this regard, the first prismatic correction calculates a difference between the given optical depth and the another optical depth, and the correction error between the actual angle of convergence and the expected angle of convergence. Herein, the term *"correction error"* refers to an angular difference between the actual angle of convergence and the expected angle of convergence. Herein, the angular difference is indicative of a mismatch between where the gaze direction of the first eye and the gaze direction of the second eye are converging and where they should be converging. The angular difference is indicative of an angular disparity based on the difference between convergence of the gaze direction of the first eye and the gaze direction of the second eye at the given optical depth and the another optical depth. Herein, incorporating the correction error between the actual angle of convergence and the expected angle of convergence enables fine-tuning optical adjustments of the optical apparatus. The correction error allows the at least one processor to identify and compensate for deviations in convergence behaviour that could result from visual conditions specific to the user or any external factor. For example, convergence may be considered to be achieved when the actual angle between the gaze directions is equal to the expected angle. It will be appreciated that the correction angle can be pre-determined by an optometrist for different optical depths. In such a case, the convergence error can be determined per eye as a function of the optical depth. User-specific information about the convergence error can then be stored at a data repository, and accessed from the data repository later. Beneficially, adjustment based on the correction error ensures that the applied correction is accurate and also customised based on the user's requirements. Optionally, in this regard, the first prismatic correction is determined based on this user-specific information and the given optical depth. Herein, the first prismatic correction is determined and applied so that perfect vision is achieved by the user's eyes based on properties of the first eye and the properties of the second eye. Optionally, the active material emulates a prism, wherein the prism can be oriented in different directions to address eye-alignment problems. For example, a base-out prism can help correct exophoria (outward eye drift), while a base-in prism can address esophoria (inward eye drift).

A technical effect of determining the first prismatic correction in such a manner is that it ensures that the first prismatic correction is precise and dynamically adjusted to requirements of individual users. Moreover, using the actual angle of convergence and the correction error enables the optical apparatus to dynamically adapt the first prismatic correction to instantaneous gaze directions of each eye of the user. Additionally, incorporating the expected angle of convergence and the correction error allows the optical apparatus to improve binocular coordination by aligning visual inputs of both eyes at the given optical depth.

The first prismatic correction can be applied to many directions (for example, such as horizontal direction, vertical direction, and similar). Moreover, the first prismatic correction can be a static bias in an orientation of the first eye, or can be insufficiency in rotation of the first eye. In this regard, the first prismatic correction is applied dynamically, when required, and not constantly. The first prismatic correction is applied by generating the first drive signal to control the first active optical element. The first drive signal can be a voltage signal or a current signal.

The first prismatic correction is applied to optically shift the light incident thereupon, for overall visual alignment of the first eye. The first prismatic correction optically shifts the light, based on the gaze direction of the first eye, such that the light (emanating from a region of the real-world environment at which the first eye is gazing) is incident on the fovea of the first eye. A technical effect of optically shifting said light is to force the gaze direction of the first eye to converge with the gaze direction of the second eye, based on the gaze point at the given optical depth. By such shifting of light for the first eye, what the user sees through the first eye is controlled according to the gaze point at the given optical depth. Hence, the first eye is compelled to accommodate its vision based on the first prismatic correction determined, which constructively impacts the convergence of the gaze direction of the first eye with the gaze direction of the second eye. Beneficially, this facilitates in assisting foveal view of the first eye to match with a foveal view of the second eye. Upon such optical shifting, the gaze point is perceived by the first eye and the second eye with a binocular disparity that corresponds to convergence sufficiency.

Optionally, a function is used to determine the first prismatic correction. Herein, the function relates to the optical shift required for the first prismatic correction to a measurable quantity that enables detection of convergence insufficiency (for example, such as the correction error, namely, an angular difference between the actual angle of convergence and the expected angle of convergence). In other words, the function depends on a lack of convergence between the gaze direction of the first eye and the gaze direction of the second eye for different optical depths. As an example, for an object of interest lying at a distance of 65 centimetres (cm) in the real-world environment from the user, the given optical depth is 65 cm; however, the another optical depth at which the user is the gaze directions converge may be 25 millimetres (mm). Hence, the first eye may rotate inwards, wherein the expected angle of convergence may be approximately 7.5 degrees. In a case when there is a lack of convergence, i.e., when the actual angle of convergence is 0 degrees, it means that the first prismatic correction needs to optically shift the light by 7.5 degrees.

Optionally, the optical shift provided by the first prismatic correction lies in a range of 0.5 degrees to 10 degrees. The optical shift provided by the first prismatic correction lies in a range of 0.5, 0.6, 0.8, 1, 3, or 6 degrees to 0.9, 2, 5, 8, or 10 degrees. A technical benefit of the aforementioned range of the optical shift is that said range enables precision in addressing various degrees of convergence insufficiency, while ensuring that the first prismatic correction is tuned to match a severity of the convergency insufficiency issue of the user's eyes.

Optionally, the first drive signal is generated to drive the first active optical element for also producing at least one first optical power, wherein the at least one first optical power to be produced depends on the given optical depth. Herein, the at least one first optical power for the first eye of the user may be a negative optical power, a zero optical power, or a positive optical power, depending on the given optical depth and the user's requirement (namely, whether the user has presbyopia or myopia). For distance viewing, the at least one optical power for the first eye of the user is the negative optical power (when the user has myopia), or the zero optical power (when the user does not have myopia). For reading or looking at nearby objects, the at least one optical power for the first eye is the positive optical power (when the user has hypermetropia or presbyopia), or the zero optical power (when the user does not have any of hypermetropia or presbyopia). A technical effect of producing the at least one first optical power is that the optical apparatus can aid at least the first eye to focus correctly at the given optical depth. Beneficially, generating the at least one optical power facilitates in promoting the binocular vision, by properly aligning the gaze direction of the first eye and the gaze direction of the second eye.

Optionally, when the first active optical element is driven using the first drive signal, an active material of the first active optical element is controlled to implement at least one of: a wedge prism, a Fresnel prism.

Herein, optionally, the first active optical element comprises the active material encased between a first substrate and a second substrate that are optically transparent. Herein, the term *"active material"* refers to a material that is actively controllable to produce at least one optical power at the first active optical element. In this regard, controlling the active material to implement optical functionalities of at least one of: the wedge prism, the Fresnel prism, allows the optical apparatus to dynamically create and adjust prismatic effects in real time or near-real time, thus addressing the convergence insufficiency. As an example, the active material can be a liquid crystal material.

In this regard, the active material is the liquid crystal material, wherein when controlling the active material, an alignment of liquid crystal molecules of the liquid crystal material is controlled to implement at least one of: the wedge prism, the Fresnel prism. In other words, the alignment of liquid crystal molecules of the liquid crystal material is controlled by controlling an electric field profile of the active material. When the wedge prism is implemented, at least one of: a refractive index of the active material is adjusted, a shape of the active material is modified, in the first active optical element. This creates a gradient in refractive properties of the active material, resulting in a wedge-shaped refractive surface within the active material. The gradient in the refractive properties emulates effect of the wedge prism, thereby causing the light passing through the active material to deviate. This deviation of the light is precise and is tailored to at least the given optical depth of the user. Hence, a thick part of the wedge prism slows down a wavefront of the light in comparison to a thin part of the wedge prism. This effectively addresses the convergence insufficiency with greater precision as compared to conventional optical apparatuses.

When the Fresnel prism is implemented, at least one of: a surface structure, a surface profile, of the active material is modified within the first active optical element. This modification of the active material is used to create a grooved surface profile, thereby emulating a structure of the Fresnel prism. The grooved surface profile refracts light passing through it in a manner similar to Fresnel prisms. In this regard, an electric field profile varies according to distance to a centre of lens aperture of the Fresnel prism. Herein, the active material has a threshold voltage (Vₜₕ) and a tilt voltage (Vₜᵢₗₜ). When the first drive signal applied to the active material is below the threshold voltage (Vₜₕ), the active material has no effect on the light incident through the active material. The tilt voltage (Vₜᵢₗₜ) is applied to control an amount of tilt in the electric field profile. Hence, greater the voltage signal, stronger is the tilt. Hence, the electric field profile emulates the Fresnel prism, bending the light when passing therethrough, wherein an amount of bending of the light depends on a strength of the tilt, which is controlled by the tilt voltage (Vₜᵢₗₜ). This allows the optical apparatus to dynamically adjust a focus of the first active optical element, which helps in correcting the convergence insufficiency.

A technical effect of controlling the active material of the first active optical element in such a manner is that it allows to make adjustments dynamically to create prism-like optical functionalities, thus ensuring correction of the convergence insufficiency, when in use. Beneficially, this facilitates in adapting the first active optical element based on changing requirements of the user or environmental conditions, thus enhancing a versatility and adaptability of the optical apparatus.

Optionally, wherein the optical apparatus further comprises a second active optical element of the second eye of the user, and wherein the at least one processor is configured to: when it is detected that the given criterion is satisfied,
determine a second prismatic correction to be applied by the second active optical element, based on the given optical depth, the another optical depth, and at least one of: the actual angle of convergence, the expected angle of convergence, the correction error; and
generate a second drive signal to drive the second active optical element for at least applying the second prismatic correction, to optically shift light incident thereupon and emanating from the gaze point, to be incident on a fovea of the second eye.

Herein, the second active optical element is (optionally, electrically) controlled to produce optical power(s) for the second eye of the user that may be same as or different from the optical power(s) produced for the first eye of the user. The second active optical element is arranged in front of the second eye of the user. Optionally, the second active optical element may be implemented in a manner similar to the implementation of the first active optical element. It will be appreciated that the at least one processor is communicably coupled with the second active optical element.

In this regard, the second prismatic correction can be different from the first prismatic correction, i.e., an extent of the optical shift provided to the light can be different in the first active optical element and the second active optical element. The second prismatic correction is calculated in a manner similar to the calculation of the first prismatic correction. The second prismatic correction can be applied to many directions. Moreover, the second prismatic correction can be a static bias in an orientation of the second eye, or can be insufficiency in rotation of the second eye. In this regard, the second prismatic correction is applied dynamically, when required, and not constantly. The second prismatic correction is applied by generating the second drive signal to control the second active optical element. The second drive signal can be a voltage signal or a current signal.

Herein, the second prismatic correction is applied to optically shift the light incident thereupon, for overall visual alignment of the second eye. The second prismatic correction optically shifts the light, based on the gaze direction of the second eye, such that the light (emanating from a region of the real-world environment at which the second eye is gazing) in incident on the fovea of the second eye. A technical effect of optically shifting said light in such a manner is to force the gaze direction of the second eye to converge with the gaze direction of the first eye, based on the gaze point at the given optical depth. By such shifting of light for the second eye, what the user sees through the second eye is controlled according to the gaze point at the given optical depth. Hence, the second eye is compelled to accommodate its vision based on the second prismatic correction determined, which constructively impacts the convergence of the gaze direction of the second eye with the gaze direction of the first eye. Beneficially, this facilitates in assisting foveal view of the second eye to match with a foveal view of the first eye.

Optionally, another function is used to determine the second prismatic correction. Herein, the another function relates the optical shift required for the second prismatic correction to a measurable quantity that enables detection of convergence insufficiency (for example, such as the correction error, namely, an angular difference between the actual angle of convergence and the expected angle of convergence). In other words, the another function also depends on a lack of convergence between the gaze direction of the first eye and the gaze direction of the second eye for different optical depths.

Optionally, the at least one processor is further configured to determine whether the first prismatic correction is greater than a predefined prismatic correction, wherein the second prismatic correction is applied by the second active optical element when it is determined that the first prismatic correction is greater than the predefined prismatic correction. It will be appreciated that the predefined prismatic correction refers to a minimum allowable prismatic correction for the user's eyes, below which a requirement of the first prismatic correction for the first eye is low. Thus, the second prismatic correction for the second eye is required when the first prismatic correction is of a high power, hence the high power is shared between the first eye and the second eye to converge the gaze direction of the first eye and the gaze direction of the second eye. Herein, the second prismatic correction could offer additional corrective measures to aid what the first prismatic correction could not address alone. The predefined prismatic correction lies in a range of 0.5 degrees to 10 degrees. The predefined prismatic correction may, for example, lie in a range of 0.5, 0.6, 0.8, 1, 3, or 6 degrees up to 0.9, 2, 5, 8, or 10 degrees. A technical effect of applying the second prismatic correction in such a manner is that it enables a refined and precise correction for correcting visual or alignment issues, thereby improving an overall visual experience of the user.

The present disclosure also relates to the second aspect as described above. Various embodiments and variants disclosed above, with respect to the aforementioned first aspect, apply *mutatis mutandis* to the second aspect.

Optionally, the optical apparatus further comprises a second active optical element for the second eye of the user, wherein the method comprises: when it is detected that the given criterion is satisfied:
determining a second prismatic correction to be applied by the second active optical element, based on the given optical depth, the another optical depth, and at least one of: the actual angle of convergence, the expected angle of convergence, the convergence error; and
generating a second drive signal to drive the second active optical element for at least applying the second prismatic correction, to optically shift light incident thereupon and emanating from the gaze point, to be incident on a fovea of the second eye.

A technical effect of optically shifting said light in such a manner is to force the gaze direction of the second eye and the gaze direction of the first eye to converge, based on the gaze point at the given optical depth.

Optionally, the method further comprises determining whether the first prismatic correction is greater than a predefined prismatic correction, wherein the second prismatic correction is applied by the second active optical element when it is determined that the first prismatic correction is greater than the predefined prismatic correction.

A technical effect of applying the second prismatic correction in such a manner is that it enables a refined and precise correction for correcting visual or alignment issues, thereby improving an overall visual experience of the user.

Optionally, the first drive signal is generated to drive the first active optical element for also producing at least one first optical power, wherein the at least one first optical power to be produced depends on the given optical depth.

A technical effect of producing the at least one first optical power is that the optical apparatus can aid at least the first eye to focus correctly at the given optical depth. Beneficially, generating the at least one optical power facilitates in promoting the binocular vision, by properly aligning the gaze direction of the first eye and the gaze direction of the second eye.

Optionally, the given optical depth lies in a range of 20 centimetres to 200 centimetres.

A technical benefit of the aforementioned range of the given optical depth is that the range covers deviation of the gaze direction of the first eye for all age ranges.

Optionally, an optical shift provided by the first prismatic correction lies in a range of 0.5 degrees to 10 degrees.

A technical benefit of the aforementioned range of the optical shift is that said range enables precision in addressing various degrees of convergence insufficiency, while ensuring that the first prismatic correction is tuned to match a severity of the convergency insufficiency issue of the user's eyes.

Optionally, at the step of generating a first drive signal to drive the first active optical element, controlling an active material of the first active optical element to implement at least one of: a wedge prism, a Fresnel prism.

A technical effect of controlling the active material of the first active optical element in such a manner is that it allows to make adjustments dynamically to create prism-like optical functionalities, thus ensuring correction of the convergence insufficiency, when in use. Beneficially, this facilitates in adapting the first active optical element based on changing requirements of the user or environmental conditions, thus enhancing a versatility and adaptability of the optical apparatus.

### DETAILED DESCRIPTION OF THE DRAWINGS

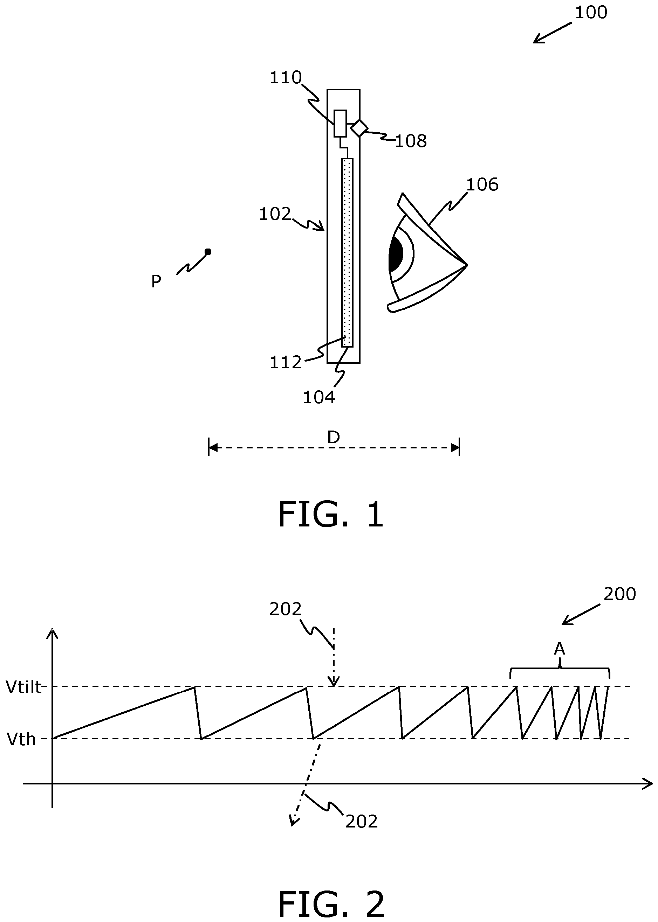

Referring to FIG. 1, there is illustrated an architecture of an optical apparatus **102** and a system **100** comprising the optical apparatus **102,** in accordance with an embodiment of the present disclosure. The optical apparatus **102** comprises a first active optical element **104** for a first eye **106** of a user, respectively, eye-tracking means **108,** and at least one processor (depicted as a processor **110).** The processor **110** is communicably coupled with the first active optical element **104,** and the eye-tracking means **108.** When the optical apparatus **102** is in use, a user gazes at a gaze point **P** at a given optical depth **D,** wherein the given optical depth **D** is determined by the processor **110.** The processor **110** is configured to perform various operations, as described earlier with respect to the aforementioned first aspect. Optionally, the first active optical element **104** comprises an active material **112** (as depicted by dotted hatchings).

FIG. 1 is merely an example, which should not unduly limit the scope of the claims herein. A person skilled in the art will recognize many variations, alternatives, and modifications of embodiments of the present disclosure.

Referring to FIG. 2, there is shown an exemplary graphical representation **200** of an optical apparatus incorporating convergence insufficiency correction, in accordance with an embodiment of the present disclosure. Herein, when a first active optical element is driven using a first drive signal (namely, a voltage signal), an active material of the first active optical element is controlled to implement at least one of: a wedge prism, a Fresnel prism. Herein, the graphical representation **200** shows an electric field profile (as depicted by a zigzag-patterned waveform) of the first active optical element when implemented as the Fresnel prism. The horizontal axis represents distance from a centre of lens aperture to a point on the first active optical element, and the vertical axis represents the voltage signal, in Volts (V), applied to drive the first active optical element. A light **202** is incident on the first active optical element, and passes through the active material. Herein, the active material has a threshold voltage (Vₜₕ) and a tilt voltage (Vₜᵢₗₜ). The tilt voltage (Vₜᵢₗₜ) is applied to control an amount of tilt in the electric field profile. Hence, greater the voltage signal, stronger is the tilt (as depicted by **A).** Hence, the electric field profile emulates the Fresnel prism, bending the light **202** when passing therethrough, wherein an amount of bending of the light **202** depends on a strength of the tilt, which is controlled by the tilt voltage (Vₜᵢₗₜ). This allows the optical apparatus to dynamically adjust a focus of the active optical element, which helps in correcting the convergence insufficiency.

FIG. 2 is merely an example, which should not unduly limit the scope of the claims herein. A person skilled in the art will recognize many variations, alternatives, and modifications of embodiments of the present disclosure.

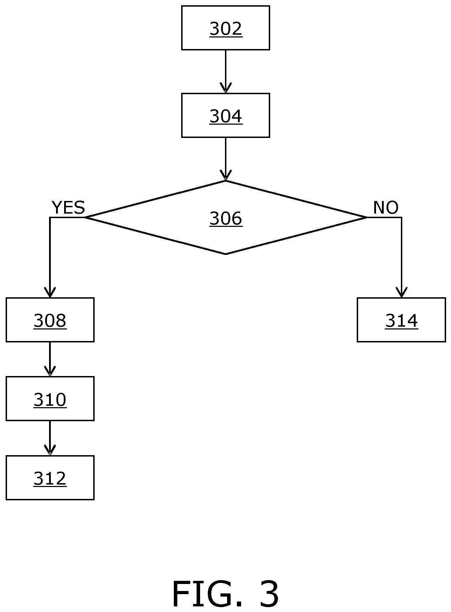

Referring to FIG. 3, illustrated is a flowchart illustrating steps of a method incorporating convergence insufficiency correction in optical apparatuses, in accordance with an embodiment of the present disclosure. The method is implemented by an optical apparatus, the optical apparatus comprising a first active optical element for a first eye of a user, and an eye-tracking means. At step **302,** eye-tracking data is processed, collected by the eye-tracking means, for determining a gaze direction of the first eye and a gaze direction of a second eye of the user. At step **304,** a given optical depth (D) is determined of a gaze point at which the user is gazing, based on at least one of: sensor data collected by a depth sensor, a pre-known optical depth of the gaze point. At step **306,** it is detected whether a given criterion for convergence insufficiency with respect to the gaze point is satisfied, wherein the given criterion is satisfied when at least one of the following is true: the gaze direction of the first eye and the gaze direction of the second eye converge at another optical depth that is different from the given optical depth of the gaze point, a user input for activating a convergence insufficiency correction mode of the optical apparatus is received. When it is detected that the given criterion is satisfied, at step **308,** the convergence insufficiency correction mode of the optical apparatus is activated. At step **310,** a first prismatic correction to be applied by the first active optical element is determined, based on the given optical depth, the another optical depth, and at least one of: an actual angle of convergence of the gaze direction of the first eye and the gaze direction of the second eye for the another optical depth, an expected angle of convergence for the given optical depth, a correction error between the actual angle and the expected angle for the given optical depth. At step **312,** a first drive signal is generated to drive the first active optical element for at least applying the first prismatic correction, to optically shift light incident thereupon and emanating from the gaze point, to be incident on a fovea of the first eye. Optionally, when it is detected that the given criterion is not satisfied, at step **314,** the convergence insufficiency correction mode of the optical apparatus is not activated.

The aforementioned steps are only illustrative and other alternatives can also be provided where one or more steps are added, one or more steps are removed, or one or more steps are provided in a different sequence without departing from the scope of the claims herein.

## Claims

1. An optical apparatus (102) comprising:
a first active optical element (104) for a first eye (106) of a user;
eye-tracking means (108); and
at least one processor (110) configured to:
process eye-tracking data, collected by the eye-tracking means, for determining a gaze direction of the first eye and a gaze direction of a second eye of the user;
determine a given optical depth (D) of a gaze point at which the user is gazing, based on at least one of: sensor data collected by a depth sensor, a pre-known optical depth of the gaze point;
detect when a given criterion for convergence insufficiency with respect to the gaze point is satisfied, wherein the given criterion is satisfied when at least one of the following is true:
the gaze direction of the first eye and the gaze direction of the second eye converge at another optical depth that is different from the given optical depth of the gaze point,
a user input for activating a convergence insufficiency correction mode of the optical apparatus is received; and
when it is detected that the given criterion is satisfied,
activate the convergence insufficiency correction mode of the optical apparatus;
determine a first prismatic correction to be applied by the first active optical element, based on the given optical depth, the another optical depth, and at least one of: an actual angle of convergence of the gaze direction of the first eye and the gaze direction of the second eye for the another optical depth, an expected angle of convergence for the given optical depth, a correction error between the actual angle and the expected angle for the given optical depth; and
generate a first drive signal to drive the first active optical element for at least applying the first prismatic correction, to optically shift light (202) incident thereupon and emanating from the gaze point, to be incident on a fovea of the first eye.

2. The optical apparatus (102) of claim 1, wherein the optical apparatus further comprises a second active optical element for the second eye of the user, and wherein the at least one processor (110) is configured to: when it is detected that the given criterion is satisfied,
determine a second prismatic correction to be applied by the second active optical element, based on the given optical depth (D), the another optical depth, and at least one of: the actual angle of convergence, the expected angle of convergence, the correction error; and
generate a second drive signal to drive the second active optical element for at least applying the second prismatic correction, to optically shift light (202) incident thereupon and emanating from the gaze point, to be incident on a fovea of the second eye.

3. The optical apparatus (102) of claim 2, wherein the at least one processor (110) is further configured to determine whether the first prismatic correction is greater than a predefined prismatic correction, wherein the second prismatic correction is applied by the second active optical element when it is determined that the first prismatic correction is greater than the predefined prismatic correction.

4. The optical apparatus (102) of any of the preceding claims, wherein the first drive signal is generated to drive the first active optical element (104) for also producing at least one first optical power, wherein the at least one first optical power to be produced depends on the given optical depth (D).

5. The optical apparatus (102) of any of the preceding claims, wherein the given optical depth (D) lies in a range of 20 centimetres to 200 centimetres.

6. The optical apparatus (102) of any of the preceding claims, wherein an optical shift provided by the first prismatic correction lies in a range of 0.5 degrees to 10 degrees.

7. The optical apparatus (102) of any of the preceding claims, wherein when the first active optical element (104) is driven using the first drive signal, an active material of the first active optical element is controlled to implement at least one of: a wedge prism, a Fresnel prism.

8. A method incorporating convergence insufficiency correction in an optical apparatus (102), the method implemented by the optical apparatus, the optical apparatus comprising a first active optical element (104) for a first eye (106) of a user, and eye-tracking means (108), the method comprising:
processing eye-tracking data, collected by the eye-tracking means, for determining a gaze direction of the first eye and a gaze direction of a second eye of the user;
determining a given optical depth (D) of a gaze point at which the user is gazing, based on at least one of: sensor data collected by a depth sensor, a pre-known optical depth of the gaze point;
detecting when a given criterion for convergence insufficiency with respect to the gaze point is satisfied, wherein the given criterion is satisfied when at least one of the following is true:
the gaze direction of the first eye and the gaze direction of the second eye converge at another optical depth that is different from the given optical depth of the gaze point,
a user input for activating a convergence insufficiency correction mode of the optical apparatus is received; and
when it is detected that the given criterion is satisfied,
activating the convergence insufficiency correction mode of the optical apparatus;
determining a first prismatic correction to be applied by the first active optical element, based on the given optical depth, the another optical depth, and at least one of: an actual angle of convergence of the gaze direction of the first eye and the gaze direction of the second eye for the another optical depth, an expected angle of convergence for the given optical depth, a correction error between the actual angle and the expected angle for the given optical depth; and
generating a first drive signal to drive the first active optical element for at least applying the first prismatic correction, to optically shift light (202) incident thereupon and emanating from the gaze point, to be incident on a fovea of the first eye.

9. The method of claim 8, wherein the optical apparatus further comprises a second active optical element for the second eye of the user, the method comprising: when it is detected that the given criterion is satisfied,
determining a second prismatic correction to be applied by the second active optical element, based on the given optical depth (D), the another optical depth, and at least one of: the actual angle of convergence, the expected angle of convergence, the correction error; and
generating a second drive signal to drive the second active optical element for at least applying the second prismatic correction, to optically shift light (202) incident thereupon and emanating from the gaze point, to be incident on a fovea of the second eye.

10. The method of claim 9, further comprising determining whether the first prismatic correction is greater than a predefined prismatic correction, wherein the second prismatic correction is applied by the second active optical element when it is determined that the first prismatic correction is greater than the predefined prismatic correction.

11. The method of any of claims 8-10, wherein the first drive signal is generated to drive the first active optical element (104) for also producing at least one first optical power, wherein the at least one first optical power to be produced depends on the given optical depth (D).

12. The method of any of claims 8-11, wherein the given optical depth (D) lies in a range of 20 centimetres to 200 centimetres.

13. The method of any of claims 8-12, wherein an optical shift provided by the first prismatic correction lies in a range of 0.5 degrees to 10 degrees.

14. The method of any of claims 8-13, wherein at the step of generating a first drive signal to drive the first active optical element, controlling an active material of the first active optical element (104) to implement at least one of: a wedge prism, a Fresnel prism.
